# EUROPEAN PATENT APPLICATION

(11) **EP 4 793 486 A1**
(43) Date of publication of application: **19.08.2026**
(21) Application number: 26154999.2
(22) Date of filing: 29.01.2026
(51) Int. Cl.: F02K 1/38, F02K 1/48

(54) **EXHAUST MIXER FOR A TURBOFAN ENGINE**

(30) Priority: 13.02.2025 GB 202502136
(71) Applicant: Rolls-Royce Deutschland Ltd & Co KG, 15827 Blankenfelde-Mahlow (DE)
(72) Inventor: MÜLLER, Lars, 15827 Blankenfelde-Mahlow (DE); VOGT, Emanuel, 15827 Blankenfelde-Mahlow (DE)

(57) **Abstract**

An exhaust mixer for a turbofan engine comprises an annular wall defining a central longitudinal axis. The annular wall has an opposed upstream end and trailing edge and defines a plurality of circumferentially distributed radially undulating first lobes and second lobes arranged in a periodic arrangement. The first lobes have a first lobe trailing edge portion, which has a shortest extent and/or longest extent along the central longitudinal axis between a radially outermost point of the first lobe and a radially innermost point of an adjacent lobe. The second lobes have a second lobe trailing edge portion that is sloped along the radial direction. An axial extent of the second lobe trailing edge portion changes along the central longitudinal axis as the second lobe trailing edge portion extends radially inwards towards the innermost point of an adjacent lobe.

## Description

### CROSS REFERENCE TO RELATED APPLICATIONS

This represents the first application directed towards the subject-matter.

### FIELD

This disclosure relates to an exhaust mixer for a gas turbine engine. More specifically, it relates to an exhaust mixer for a turbofan engine, the exhaust being so shaped to reduce fuel consumption.

### BACKGROUND

Turbofan engines, as a type of gas turbine engine, are known to have a higher propulsive efficiency than a comparable turbojet engine, resulting in lower specific fuel consumption of the turbofan engine relative to its turbojet equivalent. Turbofan engines are also known to be quieter than comparable turbojet engines at the same engine thrust.

Unlike a turbojet engine, which has a single main engine flow (core exhaust flow), the turbofan engine has two flows: an inner core exhaust flow surrounded by an outer bypass flow. When the turbofan engine is running, mixing occurs between these flows at their interface.

Many turbofan engines therefore incorporate an exhaust mixer, which is configured to reduce noise. This application relates to an improved exhaust mixer, thereby further improving (lowering) the specific fuel consumption of a turbofan engine at a specified thrust.

### SUMMARY

In a first aspect, there is provided an exhaust mixer for a turbofan engine. The turbofan engine has a bypass stream delivered by a fan that is mixed with a hot gas stream issuing from a core engine.

The exhaust mixer comprises an annular wall defining a central longitudinal axis. The annular wall has an opposed upstream end and trailing edge and defines a plurality of circumferentially distributed radially undulating lobes, such that an innermost point of a lobe protrudes radially into the hot gas stream and an outermost point of a lobe protrudes radially into the bypass stream.

The lobes comprise a periodic combination of a first lobe and a second lobe.

The first lobe has a first lobe trailing edge portion, wherein the first lobe trailing edge portion has a shortest extent and/or longest extent along the central longitudinal axis between a radially outermost point of the first lobe and a radially innermost point of an adjacent lobe.

The second lobe has a second lobe trailing edge portion that is sloped along the radial direction. An axial extent of the second lobe trailing edge portion changes monotonically along the central longitudinal axis as the second lobe trailing edge portion extends radially inwards towards the innermost point of an adjacent lobe.

According to an embodiment, the first lobe trailing edge portion of the first lobe may comprise a curve that is curved along a radial direction of the annular wall. The curve may comprise at least one arc, a portion of ellipse, a spline or a combination of arcs, portions of an ellipse, lines and/or splines.

According to an embodiment, a sum of first lobe and second lobe is in a range of 8 to 30. For example, the sum of first lobe and second lobe may be in a range of 12 to 24.

According to an embodiment the second lobe trailing edge portion may lie in a plane that is angled at an angle to the central longitudinal axis. The angle may be between 20 degrees to 160 degrees; for example, the angle may be between 30 degrees to 150 degrees.

According to an embodiment, the first lobes and the second lobes may be circumferentially equi-spaced.

According to an embodiment, a crown profile of the first lobe upstream of the first lobe trailing edge portion may be equal to a crown profile of the second lobe upstream of the second lobe trailing edge portion.

According to an embodiment, a gully profile of the first lobe upstream of the first lobe trailing edge portion may be equal to a gully profile of the second lobe upstream of the second lobe trailing edge portion.

According to an embodiment, a crown profile of the first lobe upstream of the trailing edge may differ from a crown profile of the second lobe upstream of the trailing edge.

According to an embodiment, a gully profile of the first lobe upstream of the trailing edge may differ from a gully profile of the second lobe upstream of the trailing edge.

According to an embodiment, the first lobe trailing edge portion of the first lobe may be bisected by a radial plane that extends from a central longitudinal axis of the exhaust mixer and through a crown profile of the first lobe so that the first lobe trailing edge portion has a first side to one side of the radial plane, and a second side to the other side of the radial plane. In this embodiment, the first side and second side connect at the crown profile such that the first side of the first lobe trailing edge portion is different to the second side of the first lobe trailing edge portion.

According to an embodiment, the second lobe trailing edge portion of the second lobe may be bisected by a radial plane that extends from the central longitudinal axis of the exhaust mixer and through a crown profile of the second lobe so that the second lobe trailing edge portion has a first side to one side of the radial plane, and a second side to the other side of the radial plane. In this embodiment, the first side and second side connect at the crown profile such that the first side of the second lobe trailing edge portion is different to the second side of the second lobe trailing edge portion.

According to an embodiment, the first lobe and the second lobe may be circumferentially alternating.

According to an embodiment, the periodic arrangement may additionally comprise at least one alternative first lobe and / or at least one alternative second lobe.

In this embodiment, the at least one alternative first lobe has an alternative first lobe trailing edge portion in which the alternative first lobe trailing edge portion has a shortest extent along the central longitudinal axis between the radially outermost point of the alternative first lobe and the radially innermost point. The axial position of the shortest extent of the alternative first lobe is different to another axial position of the shortest extent of the first lobe.

In this embodiment, the alternative first lobe trailing edge portion of the alternative first lobe may be bisected by a radial plane that extends from the central longitudinal axis of the exhaust mixer and through a crown profile of the alternative first lobe. The alternative first lobe trailing edge portion may have a first side to one side of the radial plane, and a second side to the other side of the radial plane. The first side and second side connect at the crown profile; wherein the alternative first side of the alternative first lobe trailing edge portion is different to the alternative second side of the alternative first lobe trailing edge portion.

In this embodiment, the at least one alternative second lobe has an alternative second lobe trailing edge portion that is sloped along the radial direction, wherein a length of the alternative second lobe trailing edge portion changes along the central longitudinal axis as the alternative second lobe trailing edge portion extends radially towards the innermost point. An alternative angle of the alternative second lobe trailing edge portion is different to the angle of the second lobe trailing edge portion of the second lobe.

In this embodiment, the alternative second lobe trailing edge portion of the alternative second lobe may be bisected by a radial plane extending from the central longitudinal axis of the exhaust mixer and through a crown profile of the alternative second lobe, the alternative second lobe trailing edge portion having a first side to one side of the radial plane, and a second side to the other side of the radial plane, the first and second side connecting at the crown profile; wherein, the alternative first side of the alternative second lobe trailing edge is different to the alternative second side of the alternative second lobe trailing edge portion.

According to an embodiment, the periodic combination repeats over a circumferential extent of at least 180 degrees.

In a second aspect, there is provided a turbofan engine comprising the exhaust mixer of the first aspect.

In a third aspect, there is provided an aircraft comprising the turbofan engine of the second aspect.

### BRIEF DESCRIPTION OF THE DRAWINGS

Embodiments will now be described by way of example only with reference to the accompanying drawings, in which:
FIG. 1 shows a cross-sectional view of an example turbofan engine;
FIG. 2 shows a perspective view of a first embodiment of an exhaust mixer;
FIG. 3 shows a back elevation view of the exhaust mixer shown in FIG. 2;
FIG. 4 shows a side elevation view of variations of a scalloped lobe;
FIG. 5 shows a side elevation view of variations of a scarfed lobe;
FIG. 6 shows a perspective view of a second embodiment of an exhaust mixer;
FIG. 7 shows a back elevation view of the exhaust mixer shown in FIG. 6;
FIG. 8 shows a perspective view of a third embodiment of an exhaust mixer; and
FIG. 9 shows a back elevation view of the exhaust mixer shown in FIG. 8.

### DETAILED DESCRIPTION

Aspects and embodiments of the present disclosure will now be discussed with reference to the accompanying FIGS. Further aspects and embodiments will be apparent to those skilled in the art.

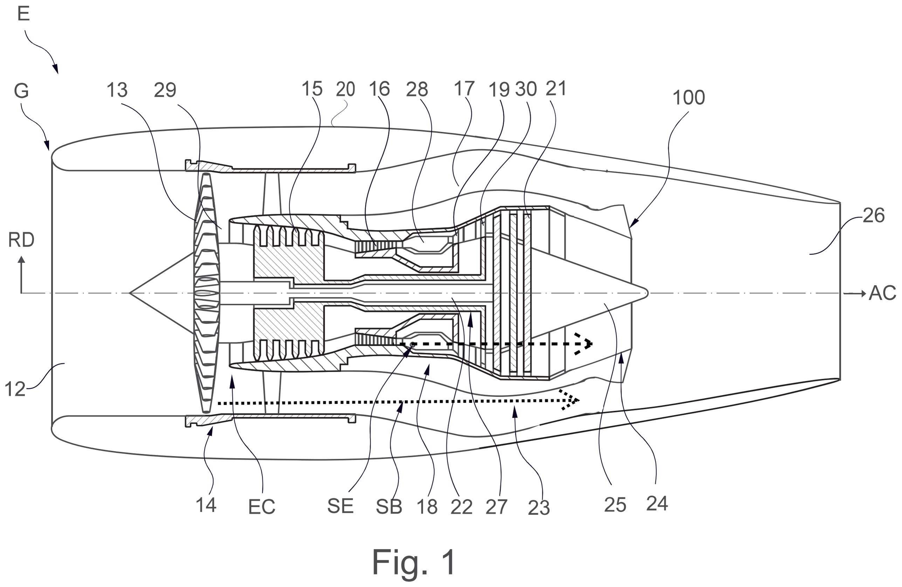

FIG. 1 schematically illustrates a sectional view of an example turbofan engine G of an aircraft engine E. Components of the aircraft engine E are arranged in series along a longitudinal engine axis AC. A radial axis RD of the turbofan engine G extends perpendicularly to the engine axis AC. Air is drawn in at the inlet 12 by means of a fan 13. This fan 13 is located in a fan frame 14 enclosed by a nacelle 20. The fan 13 is driven by a turbine 21 via a low-pressure shaft 22. The turbine 21 is connected to the fan 13. In the example of FIG 1, turbofan engine G has an intermediate-pressure compressor 15 and a high-pressure compressor 16, driven by respective intermediate-pressure and high-pressure turbines 19 to generate thrust, the fan 13 supplies the intermediate-pressure compressor 15 and the high-pressure compressor 16 as well as the bypass stream SB in the bypass duct 17 with air. This creates a core airflow FC and a bypass airflow SB that runs through the bypass duct 17. The air compressed in the compressor 15 is mixed with fuel in the combustion chamber 28 at the combustion section 18 and burned. The hot gas produced is used to drive the turbines 23, which comprises a high-pressure turbine 19 and a low-pressure turbine 21. The energy released during combustion is used by the turbine 23 to drive a low-pressure shaft 22 and thus to drive the fan 13, in order to then generate the required thrust via the air conveyed into the bypass airflow passage 17. Both the bypass stream SB from the bypass airflow passage 17 and the main flow core exhaust stream (hot gas) SE streams out at the exhaust mixer 100 via an annular exit cross section 24. The annular exit cross section 24 usually has an exhaust nozzle 26 with a centrally arranged outlet cone 25.

FIG.1 shows that the bypass stream SB and the core exhaust stream (hot gas) SE, formed by combusting fuel with the core exhaust stream (hot gas) SE within the combustion equipment mix at location 100 before the combined flow, comprising the mixed bypass stream SB and core exhaust stream (hot gas) SE, exits turbofan engine E at the exhaust nozzle 26.

At least one of the flow direction, circumferential swirl or axial velocity of the core exhaust stream (hot gas) SE and of the bypass stream SB may be different to each other at location 100. This (these) differences promote mixing between the two flows at their interface. The way the flows interact may influence a characteristic of the turbofan engine G. Example characteristics which may be influenced include the specific fuel consumption of the engine, the noise signature of the engine, the weight of the engine.

Although it is possible to permit the inner core exhaust stream (hot gas) SE and outer bypass stream SB to mix "naturally" (i.e., without any additional aerodynamic features to promote mixing), the resulting axial mixing length (i.e., an axial length after which it is determined that a sufficient degree of mixing between the two flows has occurred) may be undesirably long if it is also desired that sufficient mixing occurs before the axial position of the exhaust nozzle 26. This could lead to an elongated nacelle 20, increasing the total weight of the turbofan engine G.

Much focus has therefore been devoted to means of improving mixing between the flows to both reduce mixing length and aerodynamically- derived mixing losses to produce a lighter weight, yet higher efficiency turbofan engine G.

One way this has previously been done is by attaching an exhaust mixer 100 to a downstream portion of the rear turbine casing, with the inner wall providing an aerodynamic fairing (cover) for the core of the turbofan engine G.

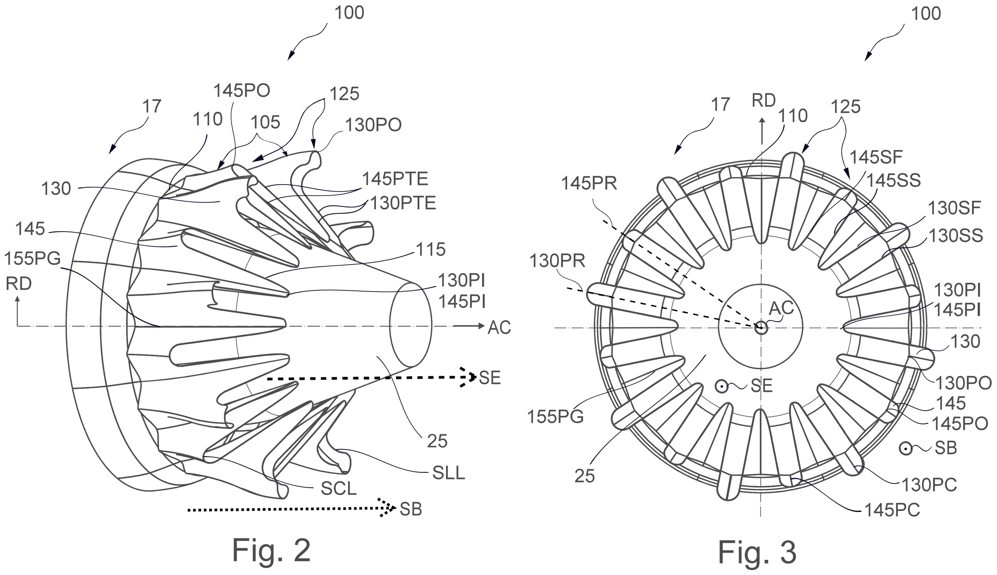

An improved exhaust mixer 100, according to a first aspect, is shown in FIG. 2 and subsequent FIGS. The exhaust mixer 100 is a lobed exhaust mixer 100.

The exhaust mixer 100 is largely concentric about the central longitudinal axis AC of the turbofan engine G and comprises an annular wall 105 that has an upstream end 110 and an opposing downstream end comprising a trailing edge 115. To reduce aerodynamic losses, the upstream end 110 of the annular wall 105 may merge with an adjoining upstream portion of the aerodynamic fairing.

For example, if the adjoining upstream portion of the aerodynamic fairing is substantially circular in cross-section, then the upstream end 110 of the exhaust mixer 100 may also be substantially circular in cross-section such that there are no significant steps in the radial direction RD at an interface formed between the upstream end 110 of the exhaust mixer 100 and the upstream portion of the aerodynamic fairing. This minimises aerodynamic losses in the bypass duct 17.

However, the downstream end of the exhaust mixer 100, comprising the exhaust mixer 100 trailing edge 115, is not substantially circular, but instead comprises a series of adjacent undulations, which vary in amplitude in the radial direction RD as the trailing edge 115 extends in a circumferential direction. In other words, the undulations would have circumferential variation in radial amplitude. When viewed along axial direction AC from exhaust nozzle 26 looking in a forward direction, these undulations may approximate to a sinusoid, though it will be appreciated that other waveforms are also possible.

The magnitude of these undulations increases from the upstream end 110 towards the trailing edge 115, such that the undulations, at different axial locations between the upstream end 110 of the annular wall 105 of the exhaust mixer 100 and the trailing edge 115 of the exhaust mixed 100 form a convoluted surface that varies periodically in the radial direction RD. These convolutions may be referred to as lobes 125 or flutes.

The lobes 125 of the exhaust mixer 100 therefore protrude into both the core exhaust stream (hot gas) SE of the core and the cold gas stream (bypass stream SB) of the bypass duct 17.

A portion of a lobe 125 that protrudes into the core exhaust stream (hot gas) SE guides a portion of bypass stream SB of the bypass duct 17 into the core exhaust (hot gas) stream SE, while a portion of a lobe 125 that protrudes into the bypass stream SB guides a portion of the core exhaust stream (hot gas) SE of the core exhaust section 24 towards the bypass air of the bypass stream SB. These flow portions are kept separate from each other by the radially innermost surface and radially outermost surfaces of the exhaust mixer 100 until the flows reach the trailing edge 115. As these flows have different characteristics, such as different velocities and flow directions, mixing occurs due to shearing between these flow portions once the trailing edge 115 is reached.

Relative to a turbofan engine G without a lobed 125 exhaust mixer 100, mixing is enhanced because the radially undulating extent of the trailing edge 115 forces mixing to occur over a range of different radial extents between radially outermost portions PO of a lobe 125, and radially innermost portions PI of a lobe 125.

During mixing, longitudinal vortices are formed at the trailing edge 115 due to crossing shear layers of the bypass stream SB and the core exhaust stream (hot gas) SE.

Some forms of lobed 125 exhaust mixer 100 are already known, and may, for example, comprise lobes 125 having a trailing edge 115 at a constant (set) axial location, such that the trailing edge 115 of the lobes 125 vary radially as the trailing edge 115 extends circumferentially.

Further mixing improvements may also be obtained if the axial extent of the trailing edge 115 of a lobe 125 also varies.

The exhaust mixer 100 of FIG 2 and 3 comprises two different types of lobes 125 which have trailing edges 115 that vary both radially and axially. The different lobe 125 types are referred to as scalloped lobes SLL and scarfed lobes SCL.

Within the current disclosure, a scalloped lobe SLL is also referred to as first lobe 130.

Within the current disclosure, a scarfed lobe SCL is also referred to as a second lobe 145.

In these FIGS, the scalloped lobes SLL and scarfed lobes SCL are arranged in a circumferentially distributed and circumferentially repeating pattern.

The scalloped lobes SLL and the scarfed lobes SCL may be circumferentially equi-spaced.

A sum of the scalloped lobes SLL and the scarfed lobes SCL may be in a range of 8 to 30. In some examples, a sum of scalloped lobe SLL and scarfed lobes SCL may be in a range of 12 to 24.

Specifically, in the example of FIGS 2 and 3, the scalloped lobes 130, SLL and the scarfed lobes 145, SCL are interspaced. In other words, each scalloped lobe 130, SLL is between a pair of scarfed lobes 145, SCL, and each scarfed lobe 145, SCL is between a pair of scalloped lobes 130, SLL.

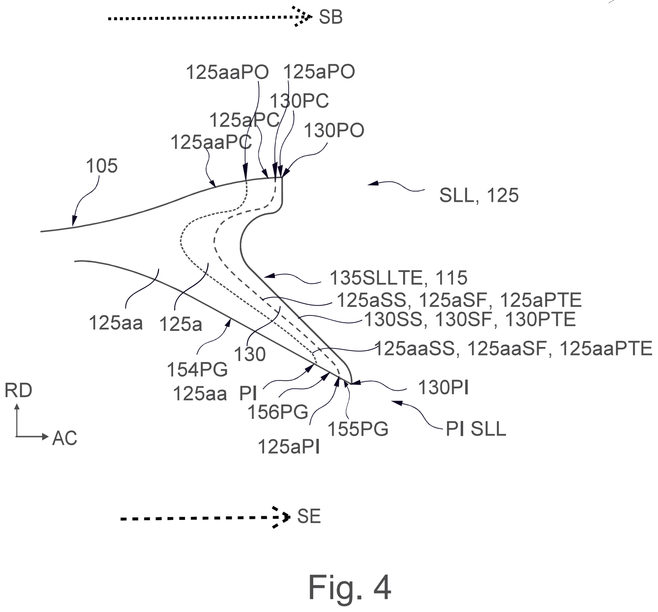

A scalloped lobe SLL is a lobe 125 which has a trailing edge 135SLLTE which has its shortest extent and/or longest extent along the central longitudinal axis AC between a radially outermost point PO SLL of the lobe 125 and a radially innermost point PI SLL of an adjacent lobe 125 which may be a scarfed SCL or a scalloped lobe SLL. When viewed from the side (i.e., along a direction that is perpendicular to both turbofan engine G central axis AC and radial direction RD), the trailing edge portion PTE of the scalloped lobe SLL comprises a curve that curves along the radial direction RD of the annular wall 105 (see FIG.4 for an example).

In other words, as the trailing edge of the scalloped lobe 135SLLTE (see FIG. 4) extends radially outwards from its radially innermost point PI SLL to its radially outermost point PO SLL, the trailing edge 135SLLTE varies axially such that there is an extremum (i.e., a maxima or minima) in axial extent that is located radially between the radially innermost point PO SLL and the radially outermost point PO SLL of the lobe 125. The curve that defines the trailing edge of the scalloped lobe 135SLLTE may comprise at least one arc, a portion of ellipse, a spline or a combination of arcs, portions of an ellipse, lines and/or splines (see FIG. 4 for an example).

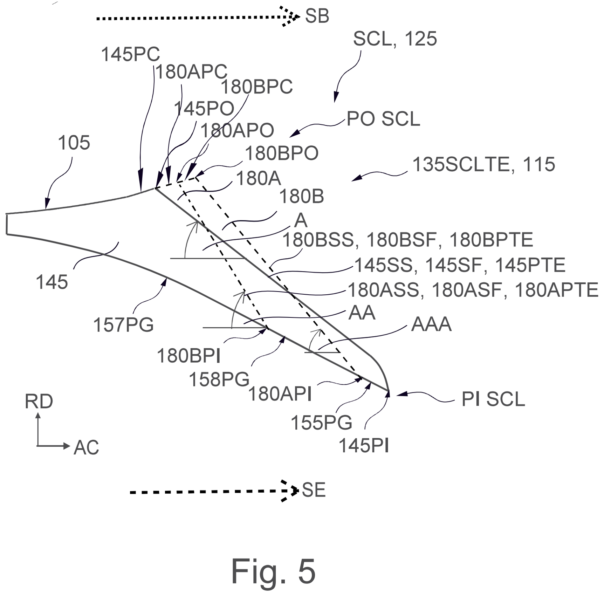

A scarfed lobe SCL is a lobe 125 which has a trailing edge 135SCLTE (see FIG. 5) that is sloped along the radial direction RD, in which an axial extent of the trailing edge 135SCLTE of the lobe 125 changes monotonically along the central longitudinal axis AC as the scarfed lobe trailing edge 135SCLTE extends radially inwards towards the innermost point PI SCL of an adjacent lobe 125. In other words, there is no extremum in axial extent that is located radially between the radially innermost point PO SCL and the radially outermost point PO SCL of the lobe 125. When viewed from the side (i.e., along a direction that is perpendicular to both turbofan engine G central axis AC and radial direction RD), the majority of the trailing edge of the scarfed lobe 135SCLTE is inclined at an angle A or AA relative to engine axis AC (see FIG. 5 for an example).

As the shape of the trailing edge of a scalloped lobe 135SCLTE differs to the shape of the trailing edge of a scalloped lobe 135SLLTE, the different lobe types (scarfed SCL and scalloped SLL) mix the bypass stream SB and the core exhaust stream (hot gas) SE in a different manner. Thus, the vorticity generated by these different lobe 125 types is different, resulting in different flow fields downstream of the trailing edge 115.

For example, although a scalloped lobe SLL generates a diverse vortex pattern, it also distributes hot gas from the core exhaust stream (hot gas) SE to a radial position that does not significantly vary around the circumference of the exhaust mixer 100. Thus, it can lead to stronger "hot spots" within the flow (when viewed in an upstream direction from downstream).

Alternatively, a scarfed lobe SCL generates a different flow field downstream of its trailing edge 135SCLTE, in that it distributes hot gas from the core exhaust stream (hot gas) SE over two different radial extents over a different radial extent (compared to the scalloped lobe SLL), leading to a better overall distribution.

Furthermore, in the example of FIGS 2 and 3, as different types of lobes 125 are circumferentially adjacent to each other, the flow fields generated by these adjacent lobes 125 differs between lobes 125. As the flow field progresses further downstream of the trailing edge 115 of the exhaust mixer 100, the flow fields generated by these adjacent flow fields interact to generate an overall flow field that is different to that generated by a known mixer design (utilising one of scarfed SCL or scalloped lobes SLL). This results in an increased propulsive efficiency of the turbofan engine G and reduce fuel consumption.

In FIGS 2 and 3, the exhaust mixer 100 comprises an annular wall 105 that surrounds (defines) a central longitudinal axis AC. The annular wall 105 has an upstream end 110 and an opposing trailing edge 115. Though not shown in the FIGS, when installed as part of a turbofan engine G, the upstream end of the annular wall 105 is adjacent to an upstream component of the turbofan engine G such as an aerodynamic fairing that forms part of an inner wall of the bypass duct 17 of the turbofan engine G.

The upstream end of the annular wall 105 may be substantially circular in cross-section or may comprise circumferentially repeating radially-extending undulations. In some examples (for example. as shown in FIG 2.) although the upstream end of the exhaust mixer 100 is substantially circular, the circumferentially repeating radially-extending undulations may initiate axially part way between the upstream end and trailing end of the exhaust mixer 100. As also shown in FIG. 2, the amplitude of these undulations increases towards the trailing edge 115 of the exhaust mixer 100 to form lobes 125.

The exhaust mixer 100 therefore comprises a plurality of circumferentially distributed radially-undulating lobes 125 in which each lobe is adjacent to at least one other lobe 125.

Thus, the trailing edge 115 of the exhaust mixer 100 comprises the trailing edge portions PTE of every lobe 125. The trailing edge 115 of each lobe 125 may therefore also be referred to as a trailing edge portion 130PTE, 145PTE of the exhaust mixer trailing edge 115.

As shown in FIGS. 2 and 3, as the trailing edge 115 of each lobe 125 undulates in a radial direction, the trailing edge portions PTE of each lobe 125 extend circumferentially from a radially-innermost point PI, through a radially-outermost point PO to a second radially innermost point PI. As FIG. 3 illustrates, the radially innermost points 130PI, 145PI of the trailing edge portion of a first lobe 130PTE, second lobe 145PTE occur at a radial minima, whereas the radially outermost point 130PO and 145PO of the trailing edge portion of the lobes 130PTE, 145PTE coincide at a radial maxima.

A line may therefore be defined between the maxima at different axial locations of a lobe 125. This line is referred to as a crown profile PC. When the exhaust mixer 100 is installed on a turbofan engine G, the crown profile PC defines the radial extent of the exhaust mixer 100 into the bypass stream SB of the bypass duct 17 of the turbofan engine G.

A line may also be defined between the minima at different axial locations of the lobe 125. This line is referred to as a gully profile 155PG. When the exhaust mixer 100 is installed on a turbofan engine G, the gully profile 155PG defines the radial extent of the exhaust mixer 100 into core exhaust stream (hot gas) SE flow of the turbofan engine G.

FIGS 2 and 3 also show that each lobe 125 is joined to an adjacent lobe 125 along a gully profile 155PG. To avoid a discontinuity in shape of the exhaust mixer 100, the gully profiles 155PG of adjacent lobes 125 are therefore identical.

From FIGS 2 and 3, it will also be appreciated that each lobe 125 has two gully profiles 155PG, at opposing circumferential extents of the lobe 125, with the crown profile PC of the lobe 125 circumferentially between the gully profiles 155PG. The crown profile PC of a lobe 125 may be equi-spaced between the opposing gully profiles 155PG of a lobe 125.

In the example of FIGS 2 and 3, the two gully profiles 155PG of each lobe 125 are identical. This is because in the example of FIGS 2 and 3, one type of scalloped lobe SLL (a first lobe 130) is interspaced with one type of scarfed lobe SCL (a second lobe 145) - i.e., the first lobes 130 and second lobes 145 of the exhaust mixer 100 alternate circumferentially. Each lobe 125 is between two identical lobes 125 (i.e., a scalloped lobe SLL is between two identical scarfed lobes SCL; a scarfed lobe SCL is between two identical scalloped lobes SLL).

However, if an exhaust mixer 100 comprises multiple different types of either scalloped lobe SLL or scarfed lobe SCL, or comprises a different circumferential arrangement of lobes 125, such that a lobe 125 of one type is not between identical lobes 125 of another type, then the circumferential opposing gully profiles 155PG of each lobe 125 may be different to each other.

This may be understood with reference to FIGS 4 to 7.

Although the exhaust mixer 100 comprises both scalloped lobes SLL (first lobes 130) and scarfed lobes SCL (second lobes 145), it will be appreciated from FIGS 4 and 5 that the degree (extent) to which a first lobe 130 is scalloped or a second lobe 145 is scarfed may vary.

For example, FIG. 4 illustrates three different example lobes 125 (scalloped lobes SLL): a first lobe 130 (shown with a continuous line representing its trailing edge 130TE), an alternative first lobe scalloped 125a (shown with a discontinuous line representing its trailing edge 125aTE) and a second alternative first lobe 125aa (shown with a discontinuous line representing its trailing edge 125aaTE).

The first lobe 130, the alternative first lobe 125a and the second alternative first lobe 125aa are first lobes because all three of the first lobe trailing edge portion 130PTE, the alternative first lobe trailing edge portion 125aPTE and the second alternative first lobe trailing edge portion 125aaPTE comprise a curve that is curved along a radial direction RD of the annular wall 105 of the exhaust mixer 100. Similarly, in all cases, the curve may be comprised from at least one arc, a portion of ellipse, a spline or a combination of arcs, portions of an ellipse, lines and/or splines.

However, FIG 4 also shows that there are several differences between the trailing edge portions PTE. For example, in FIG. 4, the shape of the curve (degree of scalloping) of the alternative first lobe 125a is different to the shape of the curve (degree of scalloping) of the first lobe 130 and the shape of the curve of the second alternative first lobe 125aa is different to the shape of the curve of the alternative first lobe 125a. Additionally, the crown profiles 130PC, 125aPC and 125aaPC of the lobes 130, 125a and 125aa may differ in their axial extent, as do the gully profiles 154PG, 155PG and 156PG. Additionally, the outermost points 130PO, 125aPO, 125aaPO of the lobes 130, 125a, 125aa may differ in their axial extent, as do the innermost points 130PI, 125aPI and 125aaPl.

Similarly, FIG. 5 illustrates two different second lobes 145 and 180A (scarfed lobes SCL). These may be referred to a second lobe 145 and an alternative second lobe 180A. The trailing edge of the alternative second lobe 180ATE (shown by a discontinuous line) is different to the trailing edge of the second lobe 145TE as the angle of inclination, "A" differs between these lobes 145 and 180A.

For the second lobe 145 and the alternative second lobe 180Athe second lobe trailing edge portion 145PTE may lie in a plane that is angled at an angle A to the central longitudinal axis AC. The angle may be between 20 degrees to 160 degrees; for example, the angle may be between 30 degrees to 150 degrees.

It will be appreciated that by varying angle A, the relative lengths of the crown profile 145PC and / or gully profile 145PG may be varied. In other words, as angle A approaches 90 degrees, the difference in axial extent between the crown profile 145PC and the gully profile 145PG tends towards zero.

If the angle of inclination (e.g. A, AA) is greater than 20 degrees but less than 90 degrees, the axial extent of the gully profile 145PG is longer than the axial extent of the crown profile 145PC.

If the angle of inclination (e.g., A, AA) is less than 160 degrees, but greater than 90 degrees, the axial extent of the gully profile 145PG is shorter than the axial extent of the crown profile 145PC.

Thus, for varying angles A and AA of the second lobe 145 and the alternative second lobe 180A changes the length of the gully profiles 145PG and 180APG relative to each other.

As will be apparent from FIG. 5, changing the length of the gully profile 155PG for the same or different radially outermost point PO SCL on the trailing edge 135SCLTE changes the radial location of the radially innermost point PI SCL (e.g. compare 145PI & 180API).

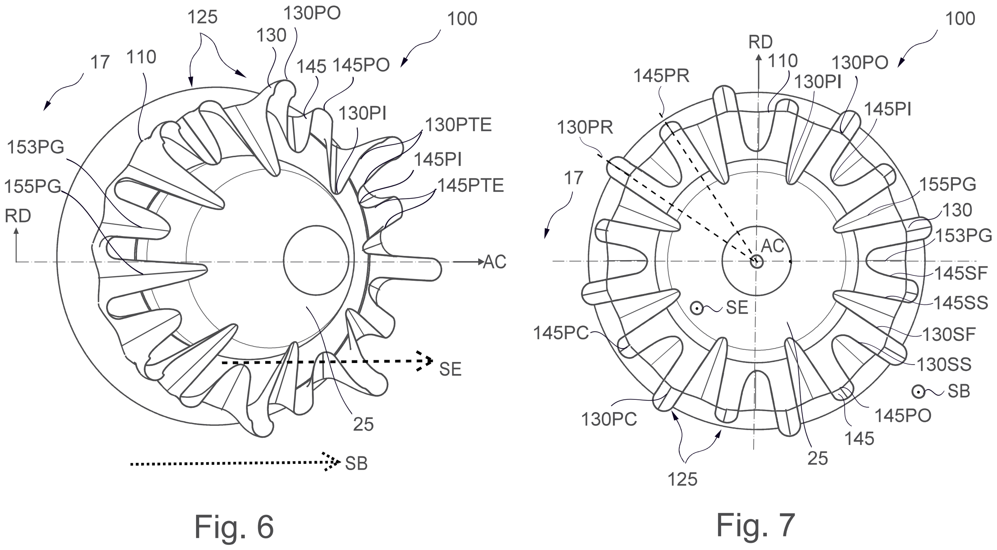

The effect of this is shown in FIGS 6 and 7, in that by additionally incorporating either or both an alternative first lobe 125a and alternative second lobe 180A into the circumferentially repeating pattern of lobes 125, an exhaust mixer 100 having lobes 125 with exhaust mixer 100 trailing edge portions PTE having different radially outermost points PO and/or radially innermost points PI may be produced. Relative to the exhaust mixer 100 of FIGS 2 and 3, this exhaust mixer 100 generates a more favourable flow field downstream of its trailing edge 115 with respect to exhaust efficiency.

Other forms of alternative (first, second) lobes 125a, 180A are also envisaged. These utilise the concept that the lobe 125 is not symmetrical about a radial plane PR passing through engine axis AC and the crown profile PC of the lobe 125. For example, for a scalloped lobe SLL, the size and/or shape of the scalloped portion, defined by the curve of the trailing edge 115, may differ between the two sides of the lobe 125 on either side of the radial plane PR. For example, for a scarfed lobe SCL, the magnitude of the angle of inclination, A, relative to engine axis AC may differ between the two sides of the lobe 125 on either side of the radial plane PR. It will be appreciated that as the trailing edge 115 to one side of the radial plane PR is different to the trailing edge 115 to the other side of the radial plane PR, the vortices shed from these trailing edges 115, though potentially similar in structure, will be different. Thus, a more enhanced mixing may be achieved by such a mixer, relative to that disclosed in FIGS 2 and 3.

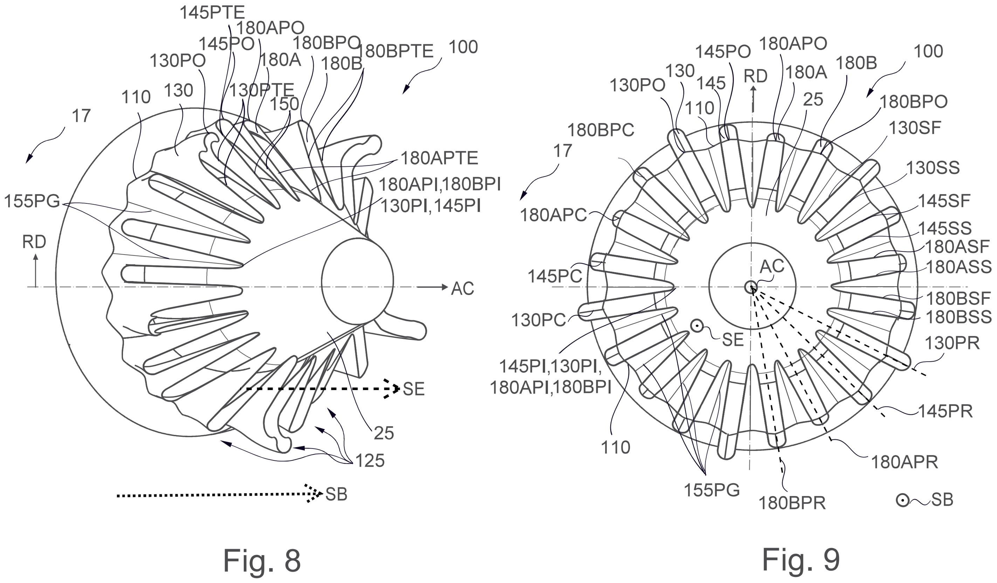

Another example variation of circumferentially repeating pattern of lobes is shown in FIGS 8 and 9. The difference to FIGS 6 and 7 is that the repeating pattern comprises additional to the first 130 and second lobe 145 at least one alternative second lobe. In the example of FIGS 8 and 9, the at least one alternative second lobe comprises a different type of alternative second lobe 180A. The repeating pattern of a scalloped lobe 130, SLL and adjusting scarfed lobes 145, SCL and 180A are also possible to that shown in previous FIGS.

The at least one alternative second lobe 180A is a type of scarfed lobe SCL and further comprises an alternative second lobe trailing edge portion 180APTE with a first side of trailing edge of alternative second lobe 180ASF and a second side of trailing edge of alternative second lobe 180ASS running from an alternative second lobe innermost point 180API of a gully profile 155PG to a second lobe innermost point 145PI of a gully profile 155PG. The alternative second lobe trailing edge portions 180APTE line up at an outermost point 180APO comprising a crown profile alternative second lobe 180APC. In the example of FIGS 8 and 9, the first 130, the second 145 and first alternative second 180A lobes are all symmetric relative to their radial planes 130PR, 145PR and 180APR respectively, which pass through engine axis AC and their respective crown profiles 130PC, 145PC, 180APC.

In some alternative examples, at least one lobe 125 of any type (first or second) may be asymmetric about its radial plane PR.

The trailing edge portions 130PTE, 145PTE and 180APTE may produce same radially innermost points 130PI, 145PI and 180API with gully profiles 155PG with the same axially extent. Relative to the exhaust mixer 100 of FIGS 6 and 7, this exhaust mixer 100 generates a more favourable flow field downstream of its trailing edge 115 with respect to exhaust efficiency.

It will be appreciated that in the above example, the circumferentially-repeating patterns of lobes extend through 360 degrees about a central axis. However, in some example mixers 100, the circumferentially-repeating pattern may not fully extend around the central axis AC but may only extend over a circumferential sector of the mixer. In all of these cases though the repeating periodic combination of lobes 125 repeats over a circumferential extent of at least 180 degrees (circumferential sector of comprising lobes is at least 180 degrees).

Alternatively or additionally, the number of lobes 125 in a circumferentially repeating profile may be a different integer to that previously disclosed. For example, in addition to the previously disclosed examples (2 and 4 lobes 125 in a circumferentially repeating pattern), the number of lobes 125 in a circumferentially repeating pattern may be 3, 5, 6, 7, 8 etc.

Various examples have been described, each of which comprise one or more combinations of features. It will be appreciated by those skilled in the art that, except where clearly mutually exclusive, any of the features may be employed separately or in combination with any other features and the invention extends to and includes all combinations and subcombinations of one or more features described herein.

### List of reference signs (part of the description)

- 12: Inlet
- 13: Fan
- 14: Fan case
- 15: Intermediate-pressure compressor
- 16: High-pressure compressor
- 17: Bypass duct
- 18: Combustion section
- 19: High-pressure turbine
- 20: Nacelle
- 21: Low-pressure turbine
- 22: Low-pressure shaft
- 23: Turbine
- 24: Exhaust section
- 25: Exhaust Cone
- 26: Exhaust nozzle
- 27: Intermediate pressure shaft
- 28: Combustion chamber
- 29: Core inlet
- 100: Exhaust mixer
- 105: Annular wall
- 110: Upstream end
- 115: Downstream trailing edge
- 125: Lobe
- 125a: Alternative first lobe
- 125aPI: Alternative first lobe innermost point
- 125aPC: Alternative first lobe crown profile
- 125aPO: Alternative first lobe outermost point
- 125aPTE: Alternative first lobe trailing edge portion
- 125aa: Second alternative first lobe
- 125aaPI: Second alternative first lobe innermost point
- 125aaPC: Second alternative first lobe crown profile
- 125aaPO: Second alternative first lobe outermost point
- 125aaPTE: Second alternative first lobe trailing edge portion
- 130: First lobe
- 130PC: Crown profile first lobe
- 130PI: First lobe innermost point
- 130PO: First lobe outermost point
- 130PR: Radial plane first lobe
- 130PTE: First lobe trailing edge portion
- 130SF: First side of trailing edge of first lobe
- 130SS: Second side of trailing edge of first lobe
- 135SCLTE: Scarfed lobe trailing edge
- 135SLLTE: Scalloped lobe trailing edge
- 145: Second lobe
- 145PC: Crown profile second lobe
- 145PI: Second lobe innermost point
- 145PO: Second lobe outermost point
- 145PR: Radial plane second lobe
- 145PTE: Second lobe trailing edge portion
- 145SF: First side of trailing edge of second lobe
- 145SS: Second side of trailing edge of second lobe
- 153PG: First alternative lobe gully profile
- 154PG: Second alternative lobe gully profile
- 155PG: Lobe gully profile
- 156PG: Third alternative lobe gully profile
- 157PG: Forth alternative lobe gully profile
- 158PG: Fifth alternative lobe gully profile
- 180A: Alternative second lobe
- 180APC: Crown profile alternative second lobe
- 180API: Alternative second lobe innermost point
- 180APO: Alternative second lobe outermost point
- 180APR: Radial plane alternative second lobe
- 180APTE: Alternative second lobe trailing edge portion
- 180ASF: First side of trailing edge of alternative second lobe
- 180ASS: Second side of trailing edge of alternative second lobe
- A: Angle
- AA: First Alternative angle
- AC: Central longitudinal axis
- E: Aircraft engine
- EC: Core engine
- G: Turbofan engine
- PC: Crown profile
- PG: Gully profile
- PI SCL: Innermost point scarfed lobe
- PI SLL: Innermost point scalloped lobe
- PO: Outermost point
- PO SLL: Outermost point scalloped lobe
- PO SCL: Outermost point scarfed lobe
- PR: Radial plane
- PTE: Trailing edge portion
- RD: Radial direction
- SB: Bypass stream
- SCL: Scarfed lobe
- SE: Core exhaust stream
- SFC: Specific fuel consumption
- SLL: Scalloped lobe

## Claims

1. An exhaust mixer (100) for a turbofan engine (G) in which a bypass stream (SB) delivered by a fan (13) is mixed with a core exhaust stream (SE) issuing from a core engine (EC), the exhaust mixer (100) comprising:
an annular wall (105) defining a central longitudinal axis (AC), the annular wall (105) having opposed upstream end (110) and trailing edge (115) and defining a plurality of circumferentially distributed radially undulating lobes (125), wherein an innermost point (PI) of a lobe (125) protrudes radially into the core exhaust stream (SE) and an outermost point (PO) of a lobe (125) protrudes radially into the bypass stream (SB), wherein the lobes (125) comprise a periodic combination of:
a first lobe (130) having a first lobe trailing edge portion (130PTE), wherein the first lobe trailing edge portion (130PTE) has a shortest extent or longest extent along the central longitudinal axis (AC) between a radially outermost point (130PO) of the first lobe (130) and a radially innermost point (130PI) of an adjacent lobe (125); and
a second lobe (145) having a second lobe trailing edge portion (145PTE) sloped along the radial direction (RD), wherein an axial extent of the second lobe trailing edge portion (145PTE) changes monotonically along the central longitudinal axis (AC) as the second lobe trailing edge portion (145PTE) extends radially inwards towards the innermost point (145PI) of an adjacent lobe (125).

2. The exhaust mixer (100) for a turbofan engine(G) of claim 1, wherein the first lobe trailing edge portion (130PTE) of the first lobe (130) comprises a curve that is curved along a radial direction (RD) of the annular wall (105), the curve comprising at least one arc, a portion of ellipse, a spline or a combination of arcs, portions of an ellipse, lines and/or splines.

3. The exhaust mixer (100) for a turbofan engine (G) as claimed in any preceding claim, wherein a sum of first lobe (130), second lobe (145) is in a range of 8 to 30.

4. The exhaust mixer (100) for a turbofan engine (G) as claimed in claim 3 wherein the sum of first lobe (130), second lobe (145) is in a range of 12 to 24.

5. The exhaust mixer (100) for a turbofan engine (G) as claimed in any preceding claim wherein the second lobe trailing edge portion (145PTE) lies in a plane that is angled at an angle (A) to the central longitudinal axis (AC), wherein the angle (A) is in a range of 20 degrees to 160 degrees.

6. The exhaust mixer (100) for a turbofan engine (G) as claimed in claim 5 wherein the angle (A) is in a range of 30 degrees to 150 degrees.

7. The exhaust mixer (100) for a turbofan engine (G) as claimed in any preceding claim wherein a crown profile (130PC) of the first lobe (130) upstream of the first lobe trailing edge portion (130PTE) is equal to a crown profile (145PC) of the second lobe (145) upstream of the second lobe trailing edge portion (145PTE); or,
a gully profile (155PG) of the first lobe (130PG) upstream of the first lobe trailing edge portion (130PTE) is equal to a gully profile (155PG) of the second lobe (145PG) upstream of the second lobe trailing edge portion (145PTE).

8. The exhaust mixer (100) for a turbofan engine (G) as claimed in claims 1 to 6, wherein:
a crown profile (130PC) of the first lobe (130) upstream of the trailing edge (115) differs from a crown profile (145PC) of the second lobe (145) upstream of the trailing edge (115); or,
a gully profile (155PG) of the first lobe (130) upstream of the trailing edge (115) differs from a gully profile (153PG) of the second lobe (145) upstream of the trailing edge (115).

9. The exhaust mixer (100) for a turbofan engine (G) as claimed in any preceding claim, wherein:
the first lobe trailing edge portion (130PTE) of the first lobe (130) is bisected by a radial plane (130PR) extending from a central longitudinal axis (AC) of the exhaust mixer (100) and through a crown profile (130PC) of the first lobe (130), the first lobe trailing edge portion (130PTE) having a first side (130SF) to one side of the radial plane (130PR), and a second side (130SS) to the other side of the radial plane (130PR), the first side(130SF) and second side (130SS) connecting at the crown profile (130PC); wherein,
the first side (130SF) of the first lobe trailing edge portion (130PTE) is different to the second side (130SS) of the first lobe trailing edge portion (130PTE); and/ or
the second lobe trailing edge portion (145PTE) of the second lobe (145) is bisected by a radial plane (145PR) extending from the central longitudinal axis (AC) of the exhaust mixer (100) and through a crown profile (145PC) of the second lobe (145), the second lobe trailing edge portion (145PTE) having a first side (145SF) to one side of the radial plane (145PR), and a second side (145SS) to the other side of the radial plane (145PR), the first side (145SF) and second side (145SS) connecting at the crown profile (145PC); wherein,
the first side (145SF) of the second lobe trailing edge portion (145PTE) is different to the second side (145SS) of the second lobe trailing edge portion (145PTE).

10. The exhaust mixer (100) for a turbofan engine (G) as claimed in any preceding claim wherein the first lobe (130) and the second lobe (145) are circumferentially alternating.

11. The exhaust mixer (100) for a turbofan engine (G) as claimed in any of claims 1 to 9, wherein the periodic arrangement additionally comprises:
at least one alternative first lobe (125a) having an alternative first lobe trailing edge portion (125aPTE), wherein the alternative first lobe trailing edge portion (125aPTE) has a shortest extent along the central longitudinal axis (AC) between the radially outermost point (125aPO) of the alternative first lobe (125a) and the radially innermost point (125aPI), wherein an axial position of the shortest extent of the alternative first lobe (125a) is different to another axial position of the shortest extent of the first lobe (130); and / or,
at least one alternative second lobe (180A) having an alternative second lobe trailing edge portion (180APTE) sloped along the radial direction (RD), wherein a length of the alternative second lobe trailing edge portion (180APTE) changes along the central longitudinal axis (AC) as the alternative second lobe trailing edge portion (180APTE) extends radially towards the innermost point (PI SLL, **PI** SCL), wherein
an alternative angle (AA) of the alternative second lobe trailing edge portion (180APTE) is different to the angle (A) of the second lobe trailing edge portion (145PTE) of the second lobe (145).

12. The exhaust mixer (100) for a turbofan engine (G) as claimed in claim 11, wherein:
the alternative first lobe trailing edge portion (125aPTE) of the alternative first lobe (125a) is bisected by a radial plane (PR) extending from the central longitudinal axis (AC) of the exhaust mixer (100) and through a crown profile (125aPC) of the alternative first lobe (125a), the alternative first lobe trailing edge portion (125aPTE) having a first side (125aSF) to one side of the radial plane (125aPR), and a second side (125aSS) to the other side of the radial plane (125aPR), the first side (125aSF) and second side (125aSS) connecting at the crown profile (125aC); wherein,
the alternative first side (125aSF) of the alternative first lobe trailing edge portion (125aPTE) is different to the alternative second side (125aSS) of the alternative first lobe trailing edge portion (125aPTE);
and/or
the alternative second lobe trailing edge portion (180APTE) of the alternative second lobe (180A) is bisected by a radial plane (180APR) extending from the central longitudinal axis (AC) of the exhaust mixer (100) and through a crown profile (180APC) of the alternative second lobe (180A), the alternative second lobe trailing edge portion (180APTE) having a first side (180ASF) to one side of the radial plane (180APR), and a second side (180ASS) to the other side of the radial plane (180APR), the first (180ASF) and second (180ASS) side connecting at the crown profile (180APC); wherein,
the alternative first side (180ASF) of the alternative second lobe trailing edge (180APTE) is different to the alternative second side (180ASS) of the alternative second lobe trailing edge portion (180APTE).

13. The exhaust mixer (100) for a turbofan engine (G) as claimed in any preceding claim wherein the periodic combination repeats over a circumferential extent of at least 180 degrees.

14. A turbofan engine (G) comprising the exhaust mixer (100) as claimed in any preceding claim.

15. An aircraft (E) comprising the turbofan engine (G) as claimed in claim 14.
